# EUROPEAN PATENT APPLICATION

(11) **EP 2 806 686 A1**
(43) Date of publication of application: **26.11.2014**
(21) Application number: 14171155.6
(22) Date of filing: 13.03.2009
(51) Int. Cl.: H04W 28/18

(54) **Coordination method, apparatus and user equipment**

(30) Priority: 20.03.2008 CN 200810065884
(62) Divisional of application: 09722395.2
(71) Applicant: Huawei Technologies Co., Ltd., Shenzhen, Guangdong 518129 (CN)
(72) Inventor: Qu, Bingyu, 518129 Shenzhen (CN); He, Yujuan, 518129 Shenzhen (CN)
(74) Representative: Schmitz, Alexander

(57) **Abstract**

A coordination method, a coordination apparatus and a user equipment are provided by the embodiment of the invention. The coordination method includes: determining a signal processing scheme for a user according to whether the signal processing scheme of the user requires coordination; and indicating to the user the signal processing scheme through user-oriented signaling. The coordination apparatus includes: a determining module, configured to determine a signal processing scheme for a user; and an indicating module, configured to indicate to the user the signal processing scheme through user-oriented signaling. The user equipment includes: an acquiring module, configured to acquire indication information about a signal processing scheme of a user contained in user-oriented signaling; and a signal processing module, configured to process a signal according to the indication information about the signal processing scheme of the user.

## Description

### FIELD OF THE TECHNOLOGY

The present invention relates to a wireless communication technology, and more particularly to a method, an apparatus and a user equipment for coordination of signal processing schemes of users.

### BACKGROUND OF THE INVENTION

In a cellular communication system, cells in different geographical locations may use same time-frequency resources, so as to improve the utilization efficiency of a frequency spectrum. In this case, mutual interference exists when the time-frequency resources of two users in different cells overlap, and the mutual interference is especially strong for users at the junction of two or more cells, which affects the throughput rate at cell borders.

In the conventional technology, a coordination technology of inter-cell time-frequency resources can be used to reduce the interference. For example, the allocation of time-frequency resources for three cells under one Node B can be coordinated by the Node B in a unified manner, so that resources allocated for users in different cells are frequency division orthogonal or time division orthogonal.

When time-frequency resources occupied by users in different cells are not orthogonal, that is, when resources overlap or superimpose, a Node B can perform combined multi-user processing, such as a serial interference cancellation technique, on these users to reduce or cancel the interference among the users.

Time-frequency resources allocated for users include resources of data channels and resources occupied by reference signals which are also known as pilot signals. In an uplink direction, when sending data, users also send corresponding reference signals which are used at a receiving end to make channel estimation for coherent demodulation. Such reference signals are also known as reference signals for channel estimation. In addition, there is another type of uplink reference signals which are used for channel quality measurement to measure the channel quality on a broader frequency band, in which the channel quality is provided to a base station for multi-user scheduling or adjustment of user modulation and coding modes. Such reference signals are called reference signals for channel quality measurement.

For reference signals of users in different cells, when time-frequency resources thereof completely overlap, the time-frequency resources can be divided through code division. For example, when a sequence used by reference signals is similar to a constant amplitude zero auto correlation (CAZAC) sequence, different time shifts of the same sequence can be distributed to different users, and orthogonal code division of the reference signals can be obtained using the characteristics of the sequence. Specifically in the conventional technology, the same sequence group used by reference signals is allocated for several cells, which can be referred to as a sequence group specific to a cell group. One special case is a sequence group specific to a Node B, for example, three cells under one Node B use the same sequence group. There is a corresponding sequence in the sequence group for each resource-occupying mode allocated for sequence-modulated signals. Since the same sequence group is used by different cells, when the time-frequency resources occupied by reference signals of the users in different cells completely overlap, the sequences selected thereby are also exactly the same, and full orthogonal code division between these signals can be obtained by using different sequence shifts.

However, the orthogonal code division of reference signals can only be used when time-frequency resources occupied by reference signals of two users are exactly the same. The orthogonal code division can not be obtained when the time-frequency resources occupied by the reference signals of the two users partially overlap. In addition, different from data channels, when time-frequency resources occupied by uplink reference signals of two users partially overlap, there is no simple and practical combined processing method for reducing the interference between the uplink reference signals. In the conventional technology, one method is to allocate a sequence group used by reference signals for each cell under a Node B; since different sequence groups have little correlation, the interference between the uplink reference signals of the users in different cells is weak or random; however, compared with that of orthogonal code division, the interference is still strong.

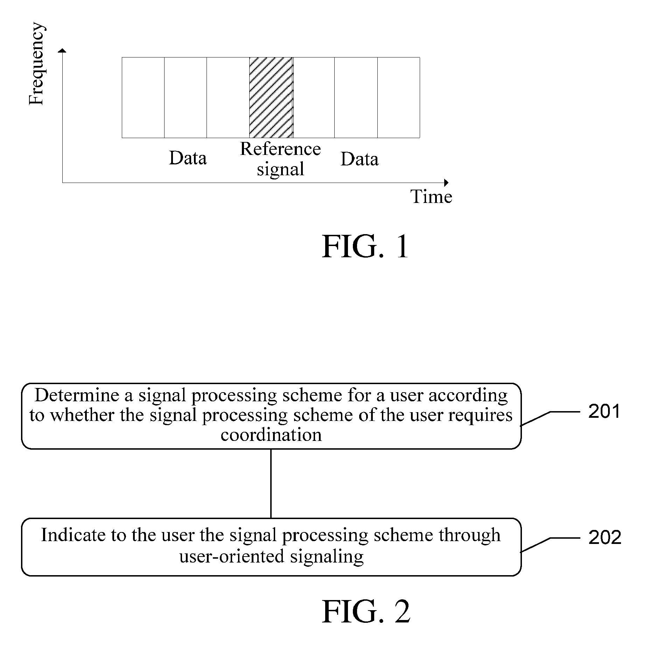

For example, as shown in FIG. 1, when reference signals and data of a user are time division multiplexed, the reference signals and the data occupy the same frequency resources. Generally, resource allocation for data channels of users is flexible, so that partial overlapping of time-frequency resources occupied by two users in different cells may occur easily. At this time, how to coordinate the users to reduce the limitations on resource scheduling, improve the performance, and reduce the interference is a problem to be solved.

### SUMMARY OF THE INVENTION

The present invention provides a coordination method, a coordination apparatus and a user equipment, so as to flexibly coordinate signal processing schemes of users and reduce the interference.

According to the first aspect of the present invention a coordination method includes:
determining a signal processing scheme for a user according to whether the signal processing scheme of the user requires coordination; and
indicating to the user the signal processing scheme through user-oriented signaling.

According to a second aspect of the present invention a coordination apparatus includes:
a determining module, configured to determine a signal processing scheme for a user; and
an indicating module, configured to indicate to the user the signal processing scheme through user-oriented signaling.

According to a third aspect of the present invention a user equipment includes: an acquiring module, configured to acquire indication information about a signal processing scheme of a user contained in user-oriented signaling; and
a signal processing module, configured to process a signal according to the indication information about the signal processing scheme of the user.

The coordination method, the coordination apparatus and the user equipment according to the present invention flexibly coordinate signal processing schemes of users, reduce the interference, and improve the utilization efficiency of time-frequency resources.

### BRIEF DESCRIPTION OF THE DRAWINGS

FIG. 1 is a schematic drawing of time division multiplexing of reference signals and data of users in the prior art;
FIG. 2 is a flow chart of a coordination method according to an embodiment of the present invention;
FIG. 3 is a flow chart of a coordination method based on a reference signal according to an embodiment of the present invention;
FIG. 4 is a flow chart of a coordination method based on a modulation scheme according to an embodiment of the present invention;

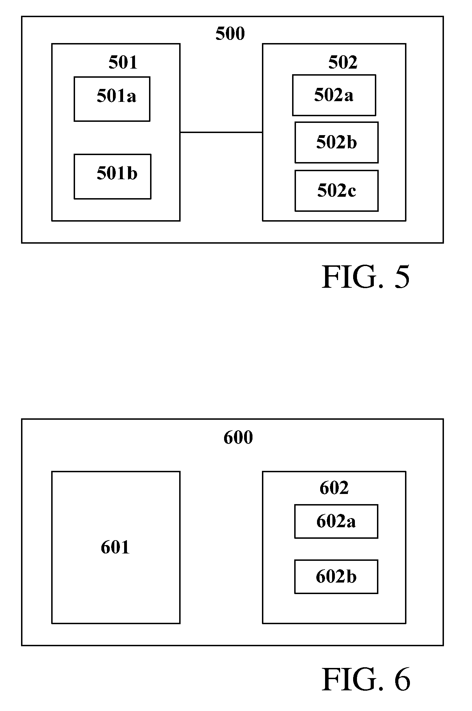

FIG. 5 is a block diagram of a coordination apparatus according to an embodiment of the present invention;
FIG. 6 is a block diagram of a user equipment according to an embodiment of the present invention; and
FIG. 7 is a schematic drawing of reference signals occupying subcarriers according to an embodiment of the present invention.

### DETAILED DESCRIPTION OF THE EMBODIMENTS

The inventor found that the prior art can not solve the problem of interference between reference signals when time-frequency resources occupied by two users partially overlap, and will limit the flexibility of resource scheduling in order to reduce the interference.

As shown in FIG. 2, a specific process of a coordination method according to an embodiment of the present invention is as follows:
201: determining a signal processing scheme for a user according to whether the signal processing scheme of the user requires coordination; and
202: indicating to the user the determined signal processing scheme through user-oriented signaling.

The user-oriented signaling may be signaling oriented to a single user or a group of users. For example, the signaling oriented to a single user includes medium access control (MAC) signaling or radio resource control (RRC) signaling; and the signaling oriented to a group of users includes dynamic broadcast signaling.

Such a coordination method can dynamically coordinate signal processing schemes of users to reduce mutual interference, and is applicable no matter whether time-frequency resources of the users to be coordinated completely or partially overlap.

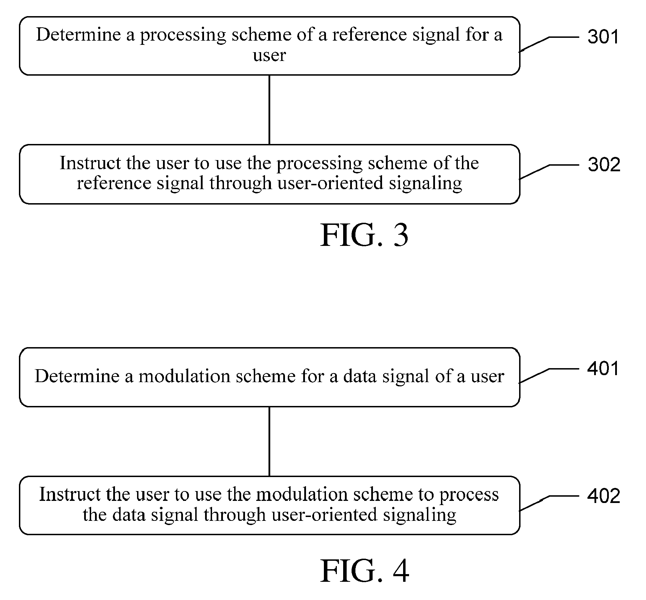

FIG. 3 is a flow chart of a coordination method based on a reference signal according to an embodiment of the present invention. A specific process of the coordination method based on a reference signal according to the embodiment of the present invention includes:
301: determining a processing scheme of a reference signal for a user; and
302: indicating to the user to use the processing scheme of the reference signal through user-oriented signaling.

The references signal of the user is a reference signal for channel estimation or a reference signal for channel quality measurement. The user-oriented signaling may be signaling oriented to a single user or a group of users. The signaling oriented to a single user includes, for example, MAC signaling or RRC signaling. The coordination method based on a reference signal reduces inter-cell interference to the reference signals, and can dynamically instruct the user to perform coordination based on the reference signals

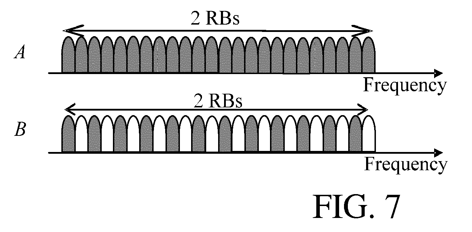

In the coordination method based on a reference signal according to the embodiment of the present invention, two types of reference signals are reference signals of different resource-occupying modes. One type of the reference signals are shown in FIG. 7A, which occupy continuous subcarriers. The other type of the reference signals occupy discontinuous subcarriers, and a common discontinuous subcarriers are "comb" subcarriers, as shown in FIG. 7B. In FIG. 7B, a gray "comb" is a first subcarrier set, and a white "comb" is a second subcarrier set, and the two "combs" are frequency division orthogonal. For users in two cells, especially users located at borders of the two cells and requiring reference signal coordination, users in Cell 1 may occupy subcarriers in the first subcarrier set, and users in Cell 2 may occupy subcarriers in the second subcarrier set. Users not requiring coordination may use reference signals of continuous subcarriers. A specific processing operation performed by users according to resources of the reference signals is transmitting or receiving the reference signals.

Comb subcarriers occupied by a reference signal according to this embodiment may include two or more comb subcarrier sets. For example, subcarrier sets obtained by taking one subcarrier from every three subcarriers are used as comb subcarriers occupied by the reference signals, so that the comb subcarriers may include three subcarrier sets which can be distributed to three user sets. Generally, R subcarrier sets may exist, in which R is corresponding to an interval of subcarriers. R may be static, semi-static or even dynamic.

When the above two types of the reference signals are used to perform coordination, users not requiring coordination use reference signals occupying continuous subcarriers, and users requiring coordination use reference signals occupying comb subcarriers.

Specifically, a sequence modulating reference signals in different cells may come from a sequence group specific to a cell. The sequence group specific to a cell includes a sequence specific to a cell corresponding to a possible time-frequency resource-occupying mode. Therefore, when users of two cells do not require coordination, the users can be instructed to use reference signals occupying continuous subcarriers. For example, for two users located inside their own cells, since the interference between different sequence groups is weak or random, that is, is whitened, the interference between the reference signals of the users is also weak or random. When reference signals of users in different cells are coordinated, comb subcarriers are used, and since the comb subcarriers are frequency division, the interference between the reference signals of the users is weak.

Besides the use of locations of users to determine whether coordination is required, resources occupied by data of users can also be used to determine whether the coordination is required. For example, a part of resources can be defined for coordination for users at borders of cells. When a user uses this part of time-frequency resources to send data, a reference signal thereof require coordination, and the user using this part of the time-frequency resources use a reference signal occupying comb subcarriers. Users not using this part of the time-frequency resources use reference signals occupying continuous subcarriers. This part of the time-frequency resources may instruct the users to use a type of the reference signals through RRC signaling, such as RRC signaling dedicated to a user, or through signaling oriented to a group of users, such as dynamic broadcast signaling.

In addition, whether a user uses a virtual multiple input multiple output (MIMO) technique can also be used to determine whether coordination is required. When the network side schedules a user for virtual MIMO transmission, so a reference signal of the user are coordinated. So that the user using the virtual MIMO technique uses a reference signal occupying comb subcarriers. A user not using the virtual MIMO technique uses a reference signal occupying continuous subcarriers.

The virtual MIMO technique allows a plurality of users to occupy the same or overlapping time-frequency resources when sending data, so as to improve the utilization efficiency of the resources and increase the system capacity. Although the data of different users may overlap, reference signals require being orthogonal, or else, the demodulation performance for data of a plurality of users at the receiving end will be affected. In the embodiment of the present invention, comb frequency division reference signals are used for virtual MIMO users, which ensures the reference signals to be orthogonal no matter whether time-frequency resources of the users are exactly the same or not, and improves the flexibility in applying virtual MIMO. Since it is clear to a user whether the user uses virtual MIMO transmission, MAC signaling of n (n≥1) bits can generally be used to instruct the user to use a type of reference signal.

At this time, an interval of comb subcarrier numbers can be dynamically determined according to the number of users using virtual MIMO transmission on the same time-frequency resources. For example, the interval of the comb subcarriers is at least 2 when 2 users occupy overlapping time-frequency resources, and the interval of the comb subcarriers is at least 3 when 3 users occupy overlapping time-frequency resources, that is, the same resources are used three times.

In another implementation of the coordination method based on a reference signal according to the embodiment of the present invention, for two types of reference signals, a modulation sequence of one type of the reference signals comes from a sequence group specific to a cell, and a modulation sequence of another type of the reference signals comes from a sequence group specific to a cell group, such as a sequence group specific to a Node B. A specific processing operation performed by users according to the sequence used by reference signals is transmitting or receiving the reference signals.

When coordination is not required for two users, for example when time-frequency resources of the two users partially overlap, a reference signal is modulated by using a sequence in a sequence group specific to a cell. When coordination is required for two users, for example, when time-frequency resources of the two users completely overlap, a reference signal is modulated by using a sequence in a sequence group specific to a cell group, for example, in a sequence group specific to a Node B. For example, all three cells under one Node B use a sequence group of one of the cells, and the two users are distinguished by different time shifts of the same sequence, so as to obtain an orthogonal sequence.

For the above two coordination methods based on reference signals according to the embodiment of the present invention, MAC signaling or RRC signaling of n bits can be used to instruct the user to use a type of reference signal, in which n can be 1. When discontinuous subcarriers are used, specific subcarrier information of the used discontinuous subcarriers, for example, a particular "comb" in comb subcarriers, and possible time cyclic shift signals of the reference signals corresponding to the "comb", need to be indicated to the users.

Reference signals in the coordination method based on a reference signal according to this embodiment may be of more than two types. For example, for reference signals occupying comb subcarriers, there are three types of the reference signals with subcarrier intervals of R=1, 2, and 3. The reference signals are similar to the above two types of reference signals, so that the details will not be described herein again.

Coordination based on a reference signal according to the embodiment of the present invention may dynamically instruct users to coordinate a reference signal, so as to reduce cell interference.

In a real system, besides uplink reference signals of users, there are some physical layer signals, for example, a preamble signal in uplink random access. The preamble signal is also modulated by using a sequence of certain characteristics, so that a receiving end can distinguish the preamble signal using the characteristics of the sequence. Similar to the problem of the above reference signal, inter-cell interference of these signals also need to be reduced, so that the coordination method according to the embodiment of the present invention also is also applicable to such signals. For preamble signals in random access, the coordination method is applicable to users undergoing cell handover, so as to reduce the interference to the signals.

FIG. 4 is a flow chart of a coordination method based on a modulation scheme according to an embodiment of the present invention. A specific process of the coordination method based on modulation schemes according to the embodiment of the present invention includes:
401: determining a modulation scheme for a data signal of a user; and
402: indicating to the user to use the modulation scheme to process the data signal through user-oriented signaling.

The user-oriented signaling may be signaling oriented to a single user or a group of users. For example, the signaling oriented to a single user includes MAC signaling or RRC signaling; and the signaling oriented to a group of users includes dynamic broadcast signaling. The coordination method can dynamically instruct some users to coordinate modulation, which enables the users to flexibly coordinate the modulation.

Two types of modulation schemes may exist for the coordination method based on a modulation scheme according to the embodiment of the present invention. One is superimposing of modulation constellation of two users, and the other is modulating independently without superimposing of the modulation constellation. Definitely, many other modulation schemes that can be coordinated may also exist.

A specific constellation superimposing method is as follows.

It is assumed that a signal after quadrature phase shift keying (QPSK) modulation by a user at a border of a cell is s₁ (*t*) = *x*1 + *jy*₁*,* in which *j* represents an imaginary part of a complex number, and a signal transmitted after power adjustment is *c*₁*s*₁ (*t*), in which *c*₁ is a power adjustment factor; and a signal after QPSK modulation by a user inside a cell is *s*₂(*t*) *= x*₂ + *jy*₂ *,* in *which j* represents an imaginary part of a complex number, and a signal transmitted after power adjustment is *c*₂*s*₂(*t*), in which *c*₂ is a power adjustment factor, so that a signal transmitted after constellation superimposing is *c*₁*s*₁ (*t*) + *c*₂*s*₂(*t*); generally, *c*₁ *> c*₂ *,* that is, the user at the border of the cell need more power than the user inside the cell. For coordinated demodulation of the two users, the user at the border of the cell demodulates *c*₂*s*₂(*t*) as interference. The user inside the cell may treat *c*₂*s*₂(*t*) as interference first, demodulate the signal of the user at the border for interference cancellation so as to cancel the interference of the user at the border, and then demodulate *c*₂*s*₂(*t*)*.*

When the modulations of constellation superimposing are not performed, assuming that *c*₂*s*₂(*t*) is received, and *c*₁ *· s*₁ (*t*) does not exist, interference cancellation is not needed.

Preferably, the coordination method based on modulation schemes is applied in downlink to coordinate users at a border of and inside a cell, and to perform constellation superimposing when the two users occupy the same resources, for example, occupy the same subcarriers.

An indication to users through MAC signaling or RRC signaling of whether to coordinate modulation or not can flexibly notify the user inside the cell of whether the modulation is coordinated, so that the user inside the cell uses a corresponding demodulation scheme to reduce the interference of the cell.

The coordination method according to the embodiment of present invention is applicable to coordination of users in two cells, which requires neither coordination of all adjacent cells, nor coordination of all users in the two cells. Little interference between coordinated users exists, and the interference between users that are not coordinated and the coordinated users is still random and is not affected.

An embodiment of the present invention further provides a coordination apparatus 500, which includes a determining module 501, configured to determine a signal processing scheme for a user, and an indicating module 502, configured to indicate to the user the signal processing scheme through user-oriented signaling.

The indicating module 502 may further include any one or any combination of the following units:
a first signaling indicating unit 502a, configured to indicate to the user the signal processing scheme through MAC signaling;
a second signaling indicating unit 502b, configured to indicate to the user the signal processing scheme through RRC signaling; and
a third signaling indicating unit 502c, configured to indicate to the user the signal processing scheme through broadcast signaling.

The determining module 501 may further include at least one of the following units:
a first determining unit 501a, configured to determine a processing scheme of a reference signal for the user, in which the processing scheme of the reference signal includes processing the reference signal by using the reference signal occupying continuous subcarriers and discontinuous subcarriers, or processing the reference signal by using a sequence selected from a sequence specific to a cell and a sequence specific to a cell group; and
a second determining unit 501b, configured to determine a modulation or demodulation scheme for a data signal of the user.

The coordination apparatus 500 may be located in a base station (Node B).

An embodiment of the present invention further provides a user equipment 600, which includes an acquiring module 601, configured to acquire indication information about a signal processing scheme of a user contained in user-oriented signaling, and a signal processing module 602, configured to process a signal according to the indication information about the signal processing scheme of the user.

The signal processing module 602 may further include at least one of the following units:
a first signal processing unit 602a, configured to, when the signal processing scheme is a processing scheme of a reference signal, process the reference signal according to the reference signal occupying continuous subcarriers and discontinuous subcarriers, or process the reference signal by using a sequence selected from a sequence specific to a cell and a sequence specific to a cell group; and
a second signal processing unit 602b, configured to, when the signal processing scheme is a processing scheme of modulation schemes, modulate or demodulate data of the user according to the modulation scheme.

In the above embodiments, a signal processing scheme is determined for a user according to whether the signal processing scheme of the user requires coordination, and the determined signal processing scheme is indicated to the user through user-oriented signaling. The coordination method can dynamically coordinate the users to reduce mutual interference.

Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in a nonvolatile storage media, for example, CD-ROM, USB flash drive, or removable hard disk, and contains several instructions adapted to instruct computer equipment, for example, a personal computer, a server, or network equipment to perform the method according to the embodiments of the present invention.

## Claims

1. A coordination method, comprising:
determining (201) a signal processing scheme for a user according to whether the signal processing scheme of the user requires coordination; and
indicating (202) to the user the signal processing scheme through user-oriented signaling.

2. The coordination method according to claim 1, wherein the user-oriented signaling is signaling oriented to a single user, or signaling oriented to a group of users.

3. The coordination method according to claim 1 or 2, wherein the indicating (202) to the user the signal processing scheme through the user-oriented signaling comprises:
indicating to the user the signal processing scheme through medium access control, MAC, signaling, or radio resource control, RRC, signaling, or broadcast signaling.

4. The coordination method according to claim 1 or 2, wherein the determining (201) the signal processing scheme for the user comprises:
determining (301) a processing scheme of a reference signal for the user.

5. The coordination method according to claim 4, wherein the determining the processing scheme of the reference signal for the user comprises:
determining that the user requiring coordination uses a reference signal occupying discontinuous subcarriers; and
determining that the user not requiring coordination uses a reference signal occupying continuous subcarriers.

6. The coordination method according to claim 5, wherein the determining that the user requiring coordination uses the reference signal occupying the discontinuous carriers comprises:
determining that the user using a virtual multiple input multiple output, MIMO, technique, or the user at a border of a cell, or the user occupying specific time-frequency resources, uses the reference signal occupying the discontinuous subcarriers.

7. The coordination method according to claim 5, wherein the indicating to the user the signal processing scheme through the user-oriented signaling further comprises:
indicating specific subcarrier information to the user using the reference signal occupying the discontinuous subcarriers.

8. The coordination method according to claim 6 or 7, wherein the discontinuous subcarriers are comb subcarriers, and an interval of the comb subcarriers is static, dynamic, or semi-static.

9. The coordination method according to claim 8, wherein the interval of the comb subcarriers is dynamically determined according to the number of the users of virtual MIMO occupying the same time-frequency resources.

10. The coordination method according to claim 4, wherein the determining the processing scheme of the reference signal for the user comprises:
determining that the user requiring coordination uses a reference signal modulated by using a sequence in a sequence group specific to a cell group; and
determining that the user not requiring coordination uses a reference signal modulated by using a sequence in a sequence group specific to a cell.

11. A coordination apparatus, comprising:
a determining module (501), configured to determine a signal processing scheme for a user; and
an indicating module (502), configured to indicate to the user the signal processing scheme through user-oriented signaling.

12. The coordination apparatus according to claim 11, wherein the indicating module (502) further comprises at least one of:
a first signaling indicating unit (502a), configured to indicate to the user the signal processing scheme through medium access control, MAC, signaling;
a second signaling indicating unit (502b), configured to indicate to the user the signal processing scheme through radio resource control, RRC, signaling; and
a third signaling indicating unit (502c), configured to indicate to the user the signal processing scheme through broadcast signaling.

13. The coordination apparatus according to claim 11 or 12, wherein the determining module (501) comprises at least one of:
a first determining unit (501a), configured to determine a processing scheme of a reference signal for the user, wherein the processing scheme of the references signal comprises processing the reference signal by using the reference signal occupying continuous subcarriers and discontinuous subcarriers, or processing the reference signal by using a sequence selected from a sequence specific to a cell and a sequence specific to a cell group; and
a second determining unit (501b), configured to determine a modulation scheme for a data signal of the user.

14. A user equipment, comprising:
an acquiring module (601), configured to acquire indication information about a signal processing scheme of a user contained in user-oriented signaling; and
a signal processing module (602), configured to process a signal according to the indication information about the signal processing scheme of the user.

15. The user equipment according to claim 14, wherein the signal processing module (602) comprises at least one of:
a first signal processing unit (602a), configured to, when the signal processing scheme is a processing scheme of a reference signal, process the reference signal according to the reference signal occupying continuous subcarriers and discontinuous subcarriers, or process the reference signal by using a sequence selected from a sequence specific to a cell and a sequence specific to a cell group; and
a second signal processing unit (602b), configured to, when the signal processing scheme is a processing scheme of modulation schemes, modulate or demodulate data of the user according to the modulation scheme.
